(19)

Europäisches
Patentamt
European
Patent Office
Office européen
des brevets

(11) **EP 1 876 473 A1**

(12) **EUROPEAN PATENT APPLICATION**
published in accordance with Art. 153(4) EPC

(43) Date of publication:
**09.01.2008 Bulletin 2008/02**

(51) Int Cl.:
**G01V 3/06** (2006.01)

(21) Application number: **06733217.1**

(22) Date of filing: **21.02.2006**

(86) International application number:
**PCT/RU2006/000081**

(87) International publication number:
**WO 2006/101419 (28.09.2006 Gazette 2006/39)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **24.03.2005 RU 2005108185**

(71) Applicant: **Obshchestvo S Ogranichennoy
Otvetstvennostyu "SIBI
Irkutsk 664039 (RU)**

(72) Inventors:
 • **LEGEIDO, Petr Yuryevich
  Irkutsk, 664000 (RU)**
 • **MANDELYBAUM, Mark Mironovich
  Irkutsk, 664011 (RU)**
 • **PESTEREV, Ivan Yuryevich
  Irkutsk, 664011 (RU)**
 • **AGEENKOV, Evgeny Vladimirovich
  Irkutsk, 664058 (RU)**

 • **ALAEV, Valery Nikolaevich
  Irkutsk, 664029 (RU)**
 • **DAVYDENKO, Yury Aleksandrovich
  Irkutsk, 664081 (RU)**
 • **IVANOV, Sergei Aleksandrovich
  Irkutsk, 664033 (RU)**
 • **VLADIMIROV, Viktor Vasilyevich
  Irkutsk, 664011 (RU)**
 • **MALYTSEV, Sergei Kharlampyevich
  Irkutsk, 664074 (RU)**
 • **LISITSIN, Evgeny Dmitrievich
  St.Petersburg, 192212 (RU)**
 • **PETROV, Aleksandr Arkadyevich
  St.Petersburg, 664011 (RU)**
 • **KYASPER, Vladimir Eduardovich
  St.Petersburg, 192283 (RU)**

(74) Representative: **Urizar Anasagasti, José Antonio
C/Victor de la Serna 3-5, Parking
28016 Madrid (ES)**

(54) **ELECTROMAGNETIC SOUNDING METHOD USING A TRANSIENT FIELD SPATIAL
DERIVATION ON SEVERAL SEPARATIONS**

(57)   The invention relates to electromagnetic prospecting and is used for surface and marine electromagnetic sounding by means of controllable electromagnetic field sources and is applied in a package oil and gas prospecting works for searching and outlining oil and gas fields. The inventive method is based on the selection of a response from earth materials which are secondary modified by hydrocarbons migration. Said invention makes it possible to ensure a set of processing technologies enabling to layer-by-layer determine an electrical resistivity and process characteristics of a medium induced polarisation: a polarizability coefficient, a time con-stant and a relaxation spectrum width. The inventive method consists in carrying out a measurement by several receiving lines, wherein the position of two feeding lines of a sounding plant is substantially symmetrical with respect to the receiving lines which are located within a 30° sector from the feeding line extension, in recording a transient signal by land axial-dipole sounding devices or by marine sounding devices associated with a continuous signal recording during a ship travel and in calculating the population of interpretable parameters $P_1$ $D\varphi$, $\Delta U_H$, $P_s$ using recorded potential difference curves ($\Delta U$ (i), $\Delta^2 U(i)$) which are preliminary processed, contracted in the form of time gates and differentiated.

Fig. 1a

**(Cont. next page)**

Fig. 1b

Fig. 1 c

**Description**

The invention relates to electrical exploration. It is used both in surface and in marine electrical exploration with controlled sources of the electromagnetic field and employed within a complex of oil and gas exploration works to search and delineate oil and gas accumulations by separating the response from the secondarily altered rocks affected by hydrocarbon migration. The invention offers a set of working methods providing layer-by-layer determination of the electrical resistivity value and the characteristics of medium induced polarization processes, namely polarizability coefficient, time constant and relaxation spectrum width.

Prior art geoelectric prospecting methods based on investigation of both artificial and natural fields were designed to determine the layer-by-layer distribution of electrical resistivity, i.e. resistivity methods. The methods of direct (for example, VES survey) and alternate (for example, frequency sounding, near-field transient electromagnetic sounding) current stand out among them. The most common of them is the method of pulsed electric exploration based on a study of transient phenomena, i.e. sounding of transient buildup in the near-field zone (See "Geoelectric Prospecting. Reference Book on Geophysics". Moscow, Nedra, 1989, vol. 1-2). A number of problems occur when resistivity methods are used for detection and delineation of hydrocarbon accumulations. These may be driven both by a wide range of causes resulting in a variation in lateral conductivity of the horizons under study and with minuteness of such variations, particularly when the accumulations are confined to non-structural traps, where, for example, shale-out or pinch-out of a reservoir occurs. The latter occurs because often the shale-out or pinch-out of a reservoir does not lead to any visible variation in lateral conductivity of the horizon under study. In these circumstances, investigation of induced polarization (IP) processes directly or indirectly associated with the accumulation comes to the fore among non-seismic methods employed in direct exploration for hydrocarbon accumulations.

The prior art includes geoelectric prospecting methods used to determine rock mass polarizability. Operations are conducted both in the time and frequency domain. For example, the IP method (See "Geoelectric prospecting Using the Induced Polarization Method", V. A. Komarov, L., Nedra, 1980. 390 pp.) and for example, the FS-IP method (See "Geoelectric prospecting Using the Phase Method of Induced Polarization", A. V. Kulikov, Ye. A. Shemyakin, Moscow, Nedra, 1978. 160 pp.).

Most often in this case the IP model, which was proposed by K.S. Cole and R.H. Cole (the Cole-Cole model) in "Dispersion and Absorption in Dielectrics" (J. Chem. Phys., 1941. v.6.) is employed.

In this case, to describe the electrical conductivity of a model the following equation is employed:

$$\sigma_{(\omega)} = \sigma_{(\infty)}\left(1 - \frac{\eta}{1 + (i\omega\tau)^c}\right) \qquad (1)$$

where $\sigma_\infty$ is electrical conductivity at an infinite frequency; $\eta$ - polarizability coefficient; $\omega$ - circular frequency; $\tau$ - time constant; $c$ - width of relaxation spectrum varying from 0 to 1.

However, so far the information content of methods for investigating conductive polarizable media has been inadequate. The existing methods for their investigation are not adequate to derive a set of polarization parameters throughout the sedimentary section.

There are numerous examples of applying induced polarization processes for search and exploration of oil and gas deposits, which are commonly known and described, (See, for example, "Application of the Induced Polarization Method for Oil and Gas Exploration" in: "Interchange of Experience in the Area of Geophysical and Geochemical Prospecting for Oil and Gas Accumulations", Z.A. Kruglova. Moscow, VIEMS, 1975, pp. 110 - 111); "Effectiveness of Hydrocarbon Accumulation Forecasting Using the Induced Polarization Method in Western Siberia." V.S. Moiseyev, B.F. Taratorkin, V.B. Shlepnev. An abstract of report at the International Geophysical Conference, St.Petersburg, 1995; "Application of Geophysical Methods for Direct Exploration for Oil and Gas", I.G. Bazovkina, Yu.S. Korolkov, A.A. Kunarev et al. Itogi nauki i tekhniki, Moscow, VINITI Publishing House, 1978).

However, there is considerable controversy involving assessment of the effectiveness of all the above methods since the obtained geological results show instability as indicated in some publications (See, for example, "Effectiveness of Direct Exploration for Oil and Gas Accumulations Using Geophysical Techniques", V.M. Beryozkin, N.A. Gribov, D.B. Khavkina. Moscow, VIEMS, 1983; "Geological Effectiveness of Geophysical Works in Volga-Urals Oil-and-Gas Province", G.P. Ovanesov, G.P. Alekseyev, N.I. Belolikov et al. Moscow, Nedra, 1979. This relates to some internal problems of geoelectrics not easily soluble under the conventional approach.

The main problem is associated with uncertainty associated with the nature of the recorded signal. In most oil and gas fields, the sedimentary mantle has a quite high conductivity, and time ranges △UIP and △UIND for IP fields (△UIP) and for electromagnetic induction (△UIND) overlap. However, their separation product under the existing methods is imperfect. Thus, J. Wait, in "Geoelectromagnetism" (Moscow, Nedra, 1987. 235 pp.) believes that this problem, which is one of the core ones, remains unsolved.

One of well-known techniques involves artificial constraint of time and/or frequency range in investigations. Therefore, in IP method measurements are made for such times, where electromagnetic induction processes for the given arrays over the given section can be neglected. However, in the course of investigation of polarizable sections the number of mapped parameters increases 2.5 times (their polarizability coefficients, time constants and relaxation spectrum width, if the terminology of the Cole-Cole model is used, are added to specific resistivity and formation thicknesses), and the narrowing of time (or frequency) range of the investigations results in inadequate information content. Therefore, in FS-IP method only one - $_\varphi$IP estimated for the entire sedimentary section - is taken as an interpretable parameter of polarization. It is not determined layer-by-layer (let alone the mapping of all polarization parameters).

Basic problems of investigation of polarizable media are associated with the inadequate information content of the existing approaches used for their study and in many ways are caused by the unsolved main issue, that is separation of electrodynamical and polarization effects over a wide time (or frequency) range.

Typically, the investigations devoted to this problem focus on field time characteristics such as decay rate and its variation with time, and, for some arrays, the change of the transition process sign.

The closest prior art is disclosed in "Method of Geoelectric prospecting ", SU patent, No. 2219568 dated 2003.02.18, printed 2003.12.20. IPC G01V3/06, according to which the electromagnetic field inside the medium under study is excited by applying to it square-wave current pulses with spaces between them. At the end of each current pulse, instantaneous values of first difference of electric potentials are measured. The instantaneous values of second-order differences, apart from those of first-order differences, are also measured between the current pulses in spaces over the entire range. Throughout each space, two instantaneous values of the first-and second-order potential differences, which are adjacent in terms of time, are separated and their value differences are determined. Using the values of all the above differences, four normalized electrical parameters are calculated. The inverse problem is solved based on a differential evanescent wave equation of mathematical physics for dipole source intensity in an electrolytically polarized conductive medium. Thus, a model for the medium closest, in terms of geometrical structure and electrical parameters, to the one under study is found. Time sections of this model are plotted using physical parameters contained in this equation, such as electric conductivity of medium members, induced polarization coefficient and time constant of the potential drop of induced polarization.

The above prior art method has two major disadvantages. The main of them is that the input information available in the overwhelming majority of actually implemented cases seems to be insufficient to solve the inverse problem of geoelectrics, i.e. to restore the geoelectric section using the measured data. When the frequency dependence of electric conductivity is introduced, in addition to the existing types of equivalence between various geoelectric parameters of the medium, new ones emerge and the objective modular surface becomes conceptually complicated. The number of parameters requiring determination becomes too great. In these circumstances, the inverse problem cannot be introduced in the class of conditionally correct problems by limiting the space of possible solutions involving a priori geologic-geophysical information. For this case, the concept of conditionally correct problems is defined in "Methods for Solution of III-Defined Problems", A.N. Tikhonov, V. Ya. Arsenin (Moscow, 1974. 223 pp.). On the one hand, a priori data on distribution of electrical resistivity in a medium and a priori data of layer thicknesses are normally available from well log data and seismic surveys. On the other hand, no a priori information on parameter values that characterize polarizing properties of the medium ($\eta$ - polarizability coefficient; $_\tau$ - time constant; c - relaxation spectrum width), is available. To overcome this hindrance, first, layer-by-layer distribution of electrical resistivity (it would be desirable to use layer thicknesses with fixed or weakly alternating values) should be determined independently and, secondly, a set of input data independent from each other and exhibiting high sensitivity to polarization parameters should be involved.

The other major disadvantage of this method lies in the fact that its theory is believed to be based almost exceptionally on the wave equation of the electromagnetic field. Field practice and model calculations show that the input in the cumulative field of the wave component normally does not account for more than a fraction of a percent.

For the most simple cases analytical modeling, or numerical modeling for more complicated cases, was used to show that if the decay time in the space after turning the current off increases, eddy currents tend to be distributed uniformly in the medium. That is because their distribution is described by a diffusion equation. The formed parameter $P_1$ responds to the spatial inhomogeneity of the field, and therefore its variations over time are considered.

For non-polarizable media, $P_1$ with an increase in the decay time will asymptotically tend to zero. Numerical modeling indicated that this would be true for any medium, including three-dimensional-non-homogeneous ones.

The distribution pattern of IP currents in a medium and its variations with time will be different in principle. In this case, only IP processes that are linear relative to the polarizing current are investigated. In most cases, the overwhelming majority of IP EMF is created by direct voltaic applied current. This results from the fact that its density is much higher than that of eddy currents, which besides quickly decay with time. Direct current density declines as the distance from the source grows as $1/r^3$. Since IP EMF at any time point is proportionate to polarizing current density, it is needless to say about spatial homogeneity of the IP field (at any decay time). At any space point the IP field monotonously decays with time from the initial value to zero, where the decay rate depends only on medium properties (in terms of the Cole-Cole model: time constant $\tau$) rather than on the relative position between the field source and receiver.

In polarizing sections, $P_1$ with time tends to a horizontal asymptote different from zero.

One of the key problems of any electrical survey method is determination of limits for the equivalence principle effect. Where they are wide enough, application of the method frequently becomes unpractical. Electrical properties of each layer are described by four different parameters (using the terminology accepted in the Cole-Cole-model): $\rho$, $\eta$, $\tau$ and c, while the conventional methods of IP investigation usually employ two parameters: $\rho$ and $\eta$. It is obvious that the increase of the number of parameters introduced for investigation noticeably expands the limits of the equivalence principle effect.

A combination of time and space field derivatives of transient buildup applied in the method dramatically increases the information content of the method for investigation of polarizable media. This is associated both with the narrower limits of the equivalence principle effect and with the high sensitivity of interpreted parameters relative to section geoelectric characteristics, primarily the polarizing ones.

It would be most practical to create a tool, with the aid of which evidence can be quantitatively interpreted and medium parameters and their confidence intervals evaluated for arrays with a prescribed geometry on specific sites. This role is played by a program of inverse modeling.

It is known that the problem of interpretation of electromagnetic sounding over polarizable media in their modern setting is conceptually ambiguous (See "Polarizability of Rocks and the Phenomenon of High-Resolution Geoelectric Prospecting " by B.S. Svetov, V.V. Ageyev, N.A. Lebedeva. Geofizika, No. 4, 1996). To attain the uniqueness of solution it is necessary to obtain additional information, i.e. a combination of time-domain electromagnetic sounding with geometrical sounding, and to use various modes of excitation and field reception and various forms of driving current pulses. However, this problem has not been solved.

In this method, additional information is obtained by a joint analysis of transient buildup curves and its normalized spatial and time derivatives, as implemented in this method.

This method of geoelectric prospecting has been designed to solve the problem of direct exploration for hydrocarbon accumulation by investigating induced-polarization anomalies (IP) separating electrodynamical and polarization effects over a wide time range.

To solve the arising problems the method employs both spatial and time derivatives (in their prescribed combinations). Moreover, by the use of time derivatives the sensitivity of the method to variations in geoelectric properties of the section is significantly enhanced.

The aim of this method is separation of electrodynamical and polarization effects over a wide time (frequency) range, that is achieved by regarding the space-time structure of an unsteady electrical field over the polarizing sections as a unit piece.

Moreover, the increase of the number of parameters introduced for investigation noticeably expands the limits of the equivalence principle effect.

The use of time derivatives significantly enhances the sensitivity of the method to variations in geoelectric properties of the section.

A combination of time and spatial derivatives of the transient buildup applied in the method improves the information content of the method for investigation of polarizable media. This is associated both with the narrower limits of the equivalence principle effect and with the higher sensitivity of the interpreted parameters to section geoelectric characteristics, primarily the polarizing ones.

This method considerably increases sensitivity to variation in the section geoelectric parameters, primarily the polarizing ones.

Based on the separate study of electromagnetic induction and induced polarization processes, the method numerically determines conductivity parameters and induced polarization, constant decay time, and relaxation spectrum width.

The method of present invention is implemented in the following way.

The method of geoelectric prospecting using spatial derivation of the transient buildup across several spacings involves electromagnetic field excitation in the medium by applying to it a low frequency periodic sequence of sign-variable square-wave current pulses when the sounding array passes along the survey profile and determining at the same time the coordinates of all grounding points. With a prescribed time increment in the spaces between current pulses, throughout the space and after applying the current pulses throughout the pulse duration, instantaneous values of first and second-order potential differences of the transient phenomena of the electrical field between each pair of the adjacent receiving electrodes on several receiving lines are measured. The obtained values of $\Delta U(ti)$ and $\Delta 2U(ti)$ signal data sets are processed using known algorithms, for example, via compressing the source array of input data into the time windows arranged with a logarithmic increment on the time axis, with all first-order and second-order potential differences numerically differentiated with respect to time. A set of interpreted parameters is derived by calculation. Based on the calculated parameters, the inverse problem is solved using a differential equation of mathematical physics for the intensity of a dipole source in a polarizable conductive medium

$$\Delta \vec{E}(t) - \mu_0 \mu \frac{\partial}{\partial t}(\sigma \vec{E}) = 0,$$

where:

$\Delta$ - Laplace operator;

$\mu$ - magnetic conductivity, a constant magnitude for nonmagnetic media;

$\sigma$ - electrical conductivity, for polarizable media it is assumed to be frequency-dependent in accordance with the Cole-Cole equation:

$$\sigma_{(\omega)} = \sigma_{(\infty)}(1 - \frac{\eta}{1 + (i\omega\tau)^c}) \qquad (2)$$

where:

$\sigma_\infty$ - electrical conductivity at an infinite frequency;

$\eta$ - polarizability coefficient;

$\omega$ - circular frequency;

$\tau$ - time constant;

$c$ - relaxation spectrum width varying from 0 to 1.

Inverse modeling yields the medium model the closest, in terms of geometrical structure and electrical parameters, to the one under study. In this case taking into consideration all the a priori data, modeling is used only for the class of geologically interpreted models. Boundary values of the polarizability coefficient for each site are defined, geoelectric sections of the obtained parameters $\sigma$ (or $\rho$), $\eta$, $\tau$, $c$ are constructed and areas with anomalous values corresponding in plan to the location of oil and gas accumulations therein are identified. This method differs from the prior art by measurements made by several receiving lines, two current lines of the sounding array positioned almost symmetrical relative to the receiving lines; in this case the receiving lines are located within a sector of 30° from the continuation of the current lines. Transient signals are recorded either by ground dipole axial sounding arrays with a flexible geometry or by marine sounding arrays with continuous signal recording while the ship is moving. From recorded potential difference curves ($\Delta U(i)$ and $\Delta^2 U(i)$), a set of interpreted parameters $P_1$, $D\varphi$, $\Delta U_H$, $P_s$ after processing and compressing into the time windows and differentiating with respect to time is calculated using the equations below:

-   for ground investigations:

$$\Delta U_H = \frac{\Delta U(t_i)_1}{\Delta U(t_0)_1} + \frac{\Delta U(t_i)_2}{\Delta U(t_0)_2} , \qquad P_1 = \frac{\Delta^2 U(t_i)_1}{\Delta U(t_i)_1} + \frac{\Delta^2 U(t_i)_2}{\Delta U(t_i)_2} , \qquad P_s = \frac{\Delta^2 U(t_i)^*_1}{\Delta U(t_i)^*_1} + \frac{\Delta^2 U(t_i)^*_2}{\Delta U(t_i)^*_2} ,$$

$$D\varphi = (\frac{\frac{\partial}{\partial t}\Delta^2 U(t_i)_1}{\frac{\partial}{\partial t}\Delta U(t_i)_1} + \frac{\frac{\partial}{\partial t}\Delta^2 U(t_i)_2}{\frac{\partial}{\partial t}\Delta U(t_i)_2}) - (\frac{\Delta^2 U(t_i)_1}{\Delta U(t_i)_1} + \frac{\Delta^2 U(t_i)_2}{\Delta U(t_i)_2}) ,$$

-   for offshore investigations:

$$\Delta U \textit{\small н} = \frac{\Delta U(t_i)}{\Delta U(t_0)} , \qquad P_1 = \frac{\Delta^2 U(t_i)}{\Delta U(t_i)} , \qquad P_s = \frac{\Delta^2 U(t_i)^*}{\Delta U(t_i)^*} , \qquad D\varphi = \frac{\frac{\partial}{\partial t}\Delta^2 U(t_i)}{\frac{\partial}{\partial t}\Delta U(t_i)} - \frac{\Delta^2 U(t_i)}{\Delta U(t_i)}$$

where:

- $\Delta U$ and $\Delta^2 U$ are respectively first-and second-order potential differences of the electrical field;
- inferior indexes 1 and 2 correspond to the measurements obtained from the first and second position of the current line;
- ($t_i$ are time windows, in which the signal is recorded after the current in the current line is switched off;
- ($t_0$) corresponds to the time intervals when a current impulse is applied and the electrical field of transient phenomena virtually does not differ from its steady-state value that corresponds to the direct current;
- upper index * corresponds to the measurements in time windows ($t_i$ made when the current is applied;
- $\Delta U_H$ is parameter of the IP method -apparent polarizability $\eta_k$;

To solve the inverse problem parameters $P_1$ $D_\varphi$, $\Delta U_H$, $P_s$ are used, where:

- primarily parameter $P_s$ is used to derive, layer-by-layer, the values of electrical resistivity $\rho$; sequential minimization of $P_1$, $\Delta U_H$, $D_\varphi$ and $P_s$ is performed by using the difference in their objective modular surfaces; and the layer-by-layer values of $\eta$, $\tau$, $c$ are defined; depth distribution is constructed along the value profile of geoelectric parameters $\rho$, $\eta$, $\tau$, $c$, on the base on which a conclusion is made about the presence of IP anomalies associated with hydrocarbon accumulations; and oil and gas accumulations are delineated and the quality of their saturation is assessed. According to this method, the obtained values of signal data sets recorded by using an AD converter may be processed with the aid of $\mu$ - the estimator found via the Hampel function - to obtain readings at fixed time delays, and data smoothing in a two-dimensional running window separating a signal from noise. Moreover, the values of signal data sets recorded by using an AD converter at every time delay can be processed by an iteration algorithm, which eliminates the trend by using a high-pass filter, to minimize the impact of the potential gradients of the receiving electrodes, the influence of telluric currents and outliers. In particular, the obtained values of $\Delta U(t_i)$ and $\Delta^2 U(t_i)$ signal data sets can be preprocessed by suppressing commercial repeatable interference by using a differentiating filter.

The method is illustrated by the following drawings.

Fig. 1 shows a simplified circuit of a ground measuring equipment, where a) is a layout diagram of the receiving lines of a dipole axial array; b) is a current shape in the current line involving a current pulse with positive polarity, current space and current pulse with negative polarity; c) is input voltage of the AD converter.

Fig. 2 shows sounding curves $P_1(t)$ over the non-polarizable (1 - over the model with a screen) and polarizable (2 - over the screen) half-space. Polarizability $\eta$ over the screen is equal to 0. The index of curves 1, 2, 3 corresponds to a spacing of 1,000, 3,000, 5,000m, respectively.

Fig. 3 a, b, c, d show the manifestation of $S_2$ equivalence as offered by the conventional geoelectric prospecting and the proposed technology for non-polarizable and polarizable (the first layer) section of H-type.

Fig. 4 shows relationship of curves $\Delta U(t)$ and $D\varphi(t)$ for two models of a homogeneous polarizable space. The diagram shows model curves $\Delta U(t)$ and $D\varphi(t)$ over two different sections, with lower non-polarizable layers and both non-polarizable layers, respectively.

Fig. 5 a, b, show model curves $\Delta U(t)$ and $D\varphi(t)$ over two different sections. The first curve is over the 4-layer section with a conducting layer over the resistive screen. Section parameters are shown in Table 1. The second curve is over the 2-layer section. Section parameters are shown in Table 2.

Fig. 6 a, b, c compares the characteristics of this method and the conventional geoelectric prospecting in terms of sensitivity to the variation in medium properties in a two-layer structure. The curve index indicates the thickness of the first layer (m). Section parameters are shown in Table 3.

Fig. 7 a, b, c show the surface of root-mean-square deviations of P1, $D\varphi$ and $\Delta U$ when polarizability and resistance of the geoelectric layer vary (the dotted line marks contour line 0.005 for $P_1$, $D\varphi$ and 5% for $\Delta U$). Table 4.

Fig. 8 a, b, c show a two-dimensional cut of the objective modular surface in the space of parameters $\eta_3$, $\tau_3$ for the model shown in Table 4. An array of A 800 B 400 M 400 O 400 N was used. The cross shows the solution point. Table 5.

Fig. 9 shows diagrams of $P_s$ values against the limit values of the polarizability coefficient of all geometric entities of the medium. The section model and the array employed are shown above (Fig 8, Table 5).

Fig. 10 a, b, c show the marine data acquisition technique: a) is a simplified circuit of AB-MN marine measuring equipment with three spacings b) is a current shape in the current line, c) input voltage of the AD converter.
Fig. 11 shows a diagram of a non-rectilinear geometry array.
Fig. 12 shows depth section Eta.

The claimed method, taking into account the justification for the proposed approach, is implemented on the base of the following data.

Parameter P1 responds to a spatial inhomogeneity field. Since its variations over time are looked into, they are described by equation below:

$$P_1(t) = \frac{\Delta U_1(t) - \Delta U_2(t)}{\Delta U_1(t) + \Delta U_2(t)} = \frac{\Delta^2 U(t)}{\Delta U(t)} \qquad (3)$$

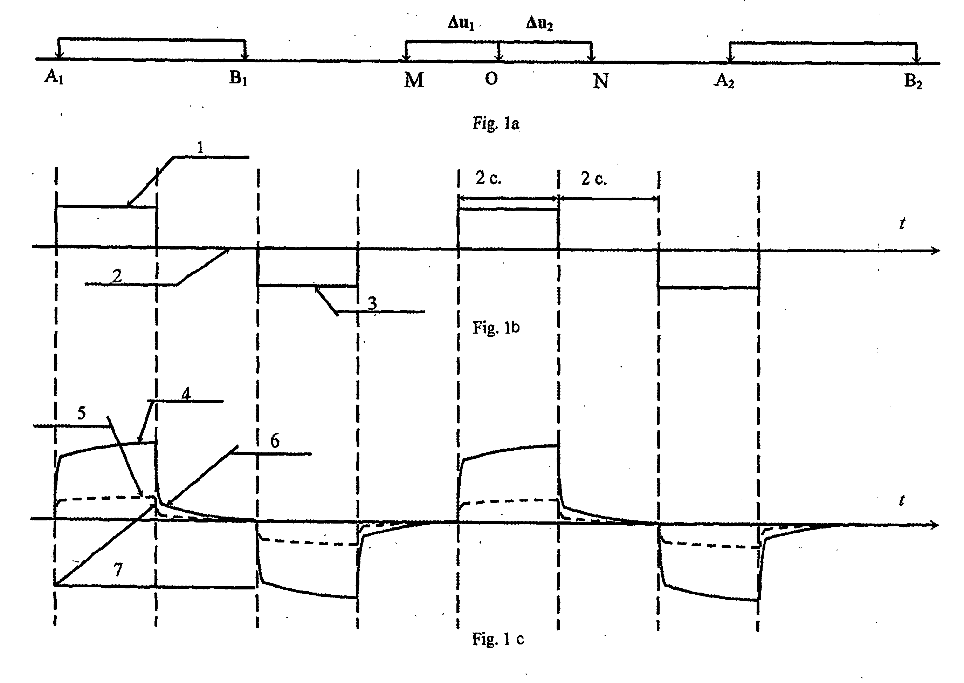

Where $\Delta U_1$ and $\Delta U_2$ are potential differences on receiving lines OM and ON for a dipole axial array (See Fig. 1a). Pulse waveform is shown for positive polarity (1); current space (2); pulse waveform of negative polarity (3) (Fig. 1 b). Input voltage of the AD converter corresponds to first-order potential differences - $\Delta U$pd (4); second-order potential differences - $\Delta U$ 2pd (5); the sum of potential differences $\Delta U = \Delta U_1 + \Delta U_2$ (6); and the difference of potential differences $\Delta U = \Delta U_1 - \Delta U_2$ (7). (Fig. 1 c).

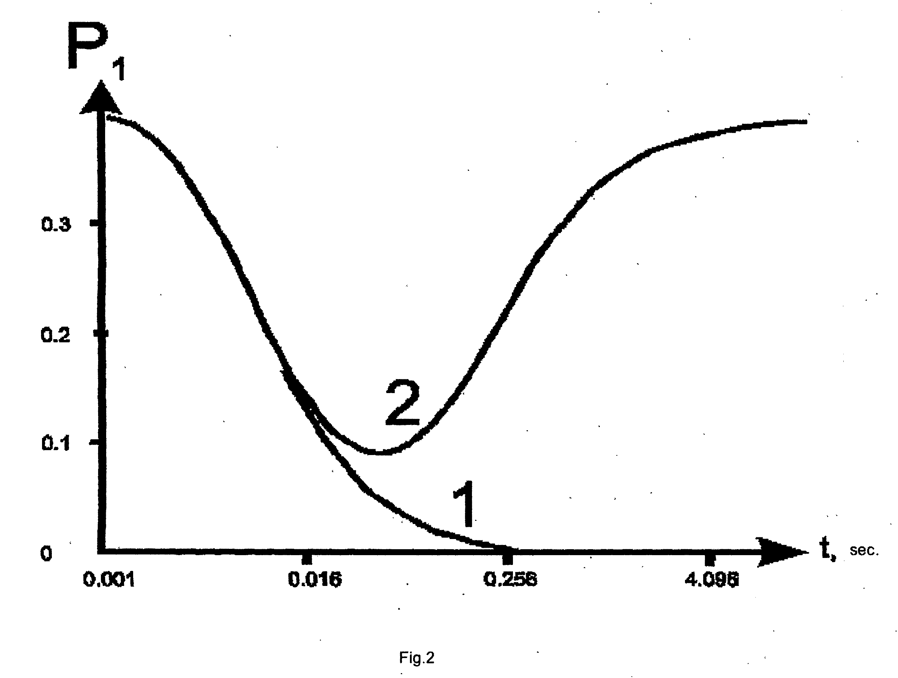

For polarizable media with time the left descending arm of curve $P_1$ becomes linked with the inductive effect, while the right ascending arm with the polarizing effect. The emergence of the ascending arm of curve is linked with spatial inhomogeneity of IP fields, which is present at any decay time. (See Fig. 2).

The fundamental concept of the approach applied here is as follows. The relation of parameter $P_1$ with conventionally used parameters $\rho_k$ and $\eta_k$ can be described in the following way:

$$\Delta E_{В\Pi} / E_{В\Pi} \approx d \; \ln\eta_k + d \; \ln\rho_k + d \; \ln 1/k, \quad (4)$$

where k is array factor. If parameter $\Delta_t \Delta E_{В\Pi} / \Delta_t E_{В\Pi}$ (where $\Delta_t$ denotes finite difference in time) is formed, then for it in a similar manner can be written:

$$\Delta_t \; \Delta E_{В\Pi} / \Delta_t \; E_{В\Pi} \approx d \; \Delta_t \; \ln\eta_k + d \; \ln\rho_k + d \; \ln 1/k, \quad (5)$$

For differences (4) and (3) (let us denote it as $D_\varphi$) we obtain:

$$D\varphi = d \ln \frac{\Delta \eta_k}{\eta_k} \qquad (6)$$

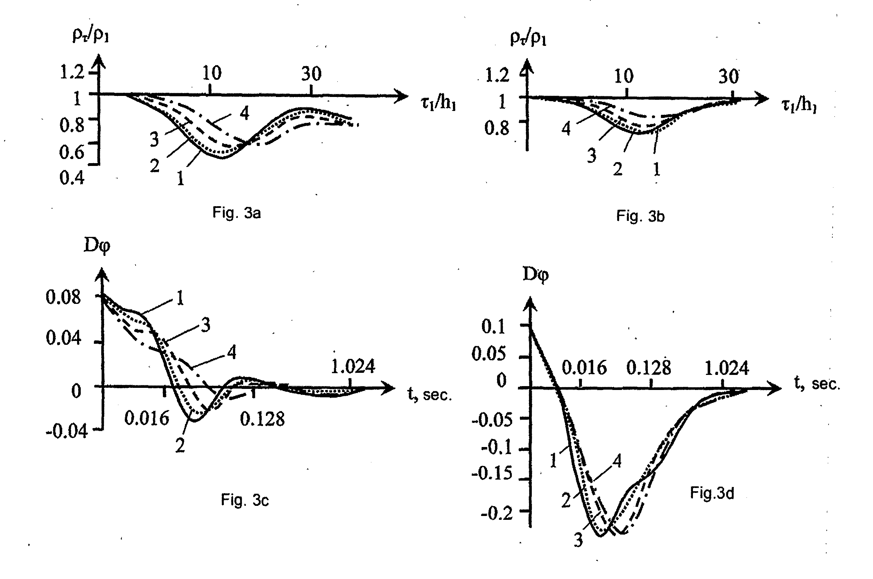

The physical meaning of $D\varphi$ becomes clear, if to take into account that the transient characteristic can be made corresponding to the real part, and its derivative with time - to the imaginary part of the frequency characteristic (See V.A. Komarov "Geoelectric prospecting Using Induced Polarization Method". L., Nedra, 1980. 390 pp.). $D_\varphi$ can be regarded as a differentially normalized analog of the phase performance of polarizable bodies. When resistance frequency dispersion is taken into consideration, the limits of equivalence significantly widen. So, for H-type sections, where equivalence in $S_2$ is observed, if the polarizability of the first layer ($\eta$=2 %) for the dipole axial electrical array is introduced, they expand more than twice. This is because the recorded field now contains not only the electrodynamical component, but the polarizing one as well, and the proportion of that part of eddy currents that reflects the properties of the second layer in the general data flow will be less. The employed parameters are constructed so that the input inductive and polarizing components of the total field are manifested in them differently. In this case, the result is that the limits of equivalence for polarizable and non-polarizable sections, when the proposed approach is applied, virtually do not change (See Fig.3). For example, equivalence characterizes percentage of deviation between the curves. Provided that measurements are made with an array of A400 B400 M200 0200 N type, the sections are characterized in the following way

for:

curve 1 - ρ/ρ = 0.05; h = 1/8
curve 2 - ρ/ρ = 0.1; h = 1/4
curve 3 - ρ/ρ = 0.2; h = 1 /2
curve 4 - ρ/ρ = 0.4; h = 1

So, the deviation between the curves under the conventional method of geoelectric prospecting for a non-polarizable cut (Fig. 3 a) is:

curves 1 and 2 - 9%
curves 1 and 3 - 28%
curves 1 and 4 - 57%

and for a polarizable cut, where η= 2%; T= 0.5 sec; c =0.5 (Fig. 3 b):

curves 1 and 2 - 4 %,
curves 1 and 3 - 12%,
curves 1 and 4 - 27 %

The deviation between curves in this method is:

for a non-polarizable cut (Fig. 3 c):

curves 1 and 2 - 0.4%
curves 1 and 3 - 1.1%
curves 1 and 4 - 3.1%

and for a polarizable cut, where η= 2%; τ= 0.5 sec; c =0.5 (Fig. 3 d):

curves 1 and 2 - 0.7 %
curves 1 and 3 - 1.7%
curves 1 and 4 - 3.2 %

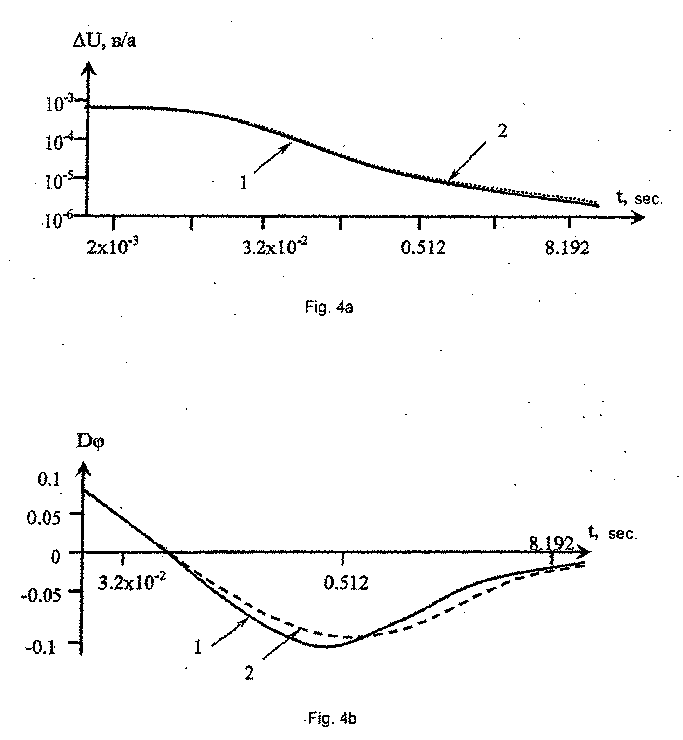

Moreover, 2 new kinds of equivalence develop for polarizable media. Equivalence of the first kind is linked with polarization parameters of specific formations (in terms of the Cole-Cole model: η,τ and c). With a sufficiently small ratio between IP and electrodynamics, it will manifest itself even in a homogeneous half-space. A number of models can be selected that virtually do not differ in terms of specific resistivity, but have distinctly different polarizing parameters, in which the difference in decay rate curves ΔU(t) will not exceed single-digit percent. In our case, the equivalence of such kind is also present, but its effect limits are several times less (See Fig. 4).

The diagram depicts the relationship of curves ΔU(t) and Dφ(t) for two models of a homogeneous polarizable space. Measurements were made with an array of AB=800 m, OHM=ON=400 m type with a spacing of 2,400 m.

Curve 1 characterizes a section with parameters: ρ=100 Ohm, η=1%, τ=1.0 sec, c =0.5.
Curve 2 characterizes a section with parameters: ρ=97,8 Ohm, η=1.8%, τ=0.189 sec, c =0.381.

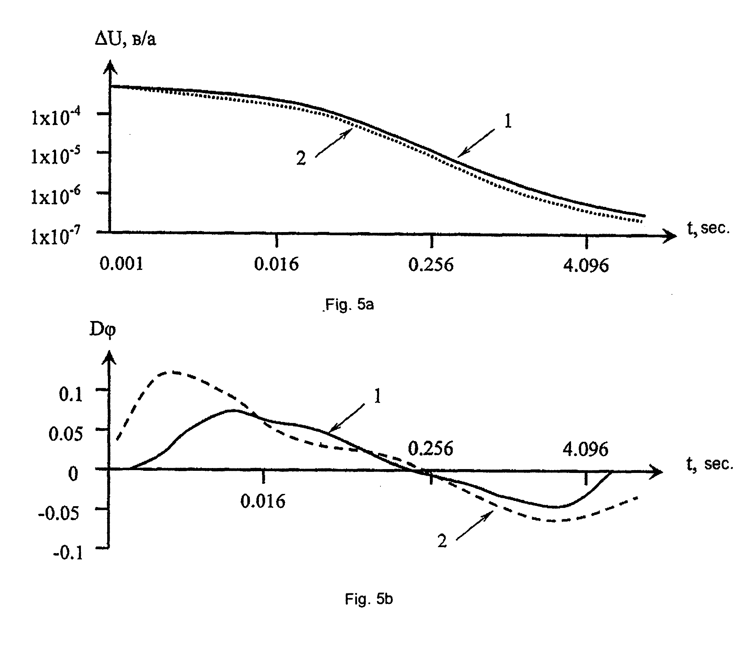

For ΔU(t), root-mean-square deviation between curves 1 and 2 is 4% (Fig. 4 a)
For Dφ(t), root-mean-square deviation between curves 1 and 2 is 2% (Fig. 4 b).
Another type of equivalence emerges between polarizing characteristics (η, τ and c) and specific resistivity ρ (or conductivity S=H/ρ) of specific layers. A threshold case is proximity of curves ΔU(t) over the sections that include polarizable formations. Where the proposed parameters are used, in most cases the manifestations of such equivalence are virtually imperceptible (See Fig.5).
Calculation is made for an array of A 1000 B 5000 M 500 O 500 N for a time range of 1 msec to 10 sec. Decay rate curves ΔU(t) and Dφ (t) are shown in Fig. 5, "a" and 5, "b" respectively. Index 1 denotes sounding curves for the model shown in Table 1. Index 2 denotes curves ΔU(t) and Dφ(t) for a two-layer section ($ρ_2 > ρ_1$), in which both layers are polarizable (Table 2).

Table 1.

| Layer | ρ, Ohm m | η, % | τ, sec | c | h, m |
|---|---|---|---|---|---|
| 1 | 50 | 2 | 0.5 | 0.5 | 200 |
| 2 | 1000 | 0 | - | - | 500 |
| 3 | 20 | 0 | - | - | 200 |
| 4 | 1000 | 0 | - | - | ∞ |

Table 2.

| Layer | ρ, Ohm m | η, % | τ, sec | c | h, m |
|---|---|---|---|---|---|
| 1 | 50 | 2 | 0.5 | 0.5 | 200 |
| 2 | 300 | 2 | 0.1 | 0.85 | ∞ |

Thus, equivalence of the second kind originates.

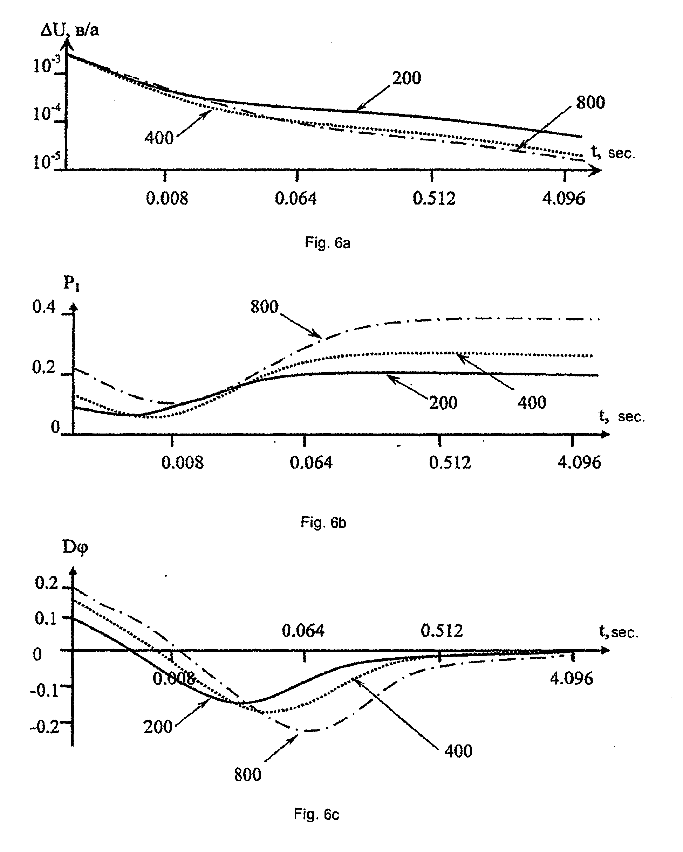

An important advantage of the new approach is high sensitivity to variation in section geoelectric parameters, primarily the polarizing ones. Results of the modeling over a number of multilayer sections suggested that the accuracy of their identification is 3 - 8 times higher as compared with ΔU(t) provided that observations feature comparable accuracies (See Fig. 6). Section parameters are shown in Table 3.

Table 3.

| Layer | ρ, Ohm m | η, % | τ, sec | c | h, m |
|---|---|---|---|---|---|
| 1 | 50 | 2 | 0.5 | 0.5 | 1) 200<br>2) 400<br>3) 800 |
| 2 | 200 | 8 | 1 | 0.5 | ∞ |

The information content of the method is defined by its capability to map geoelectric section parameters and depends primarily on the ranges of equivalence manifestations and sensitivity to the parameters under study. It is extremely difficult to calculate in advance the limits of equivalence for different polarizable sections (even the most typical ones) and appears to be hardly feasible due to both a dramatic increase in the number of parameters (2.5 times), and problematical one-to-one comparison of measurements made with arrays having various geometries. This is primarily related to the fact that parameter $P_1$ does not obey the superposition principle by virtue of nonlinearity of division by ΔU.

Inverse modeling in the method is presented as extremum seeking in a multidimensional space of parameters. An objective modular surface being complicated enough even for non-polarizable sections, with the introduction of frequency-dependent resistance becomes further complicated as new gullies and crests with depressions add to the existing ones and, what is more critical, local minimums develop. Taking into account that a null approximation may be located far enough from the solution point, there is a real danger of being "stuck" in them.

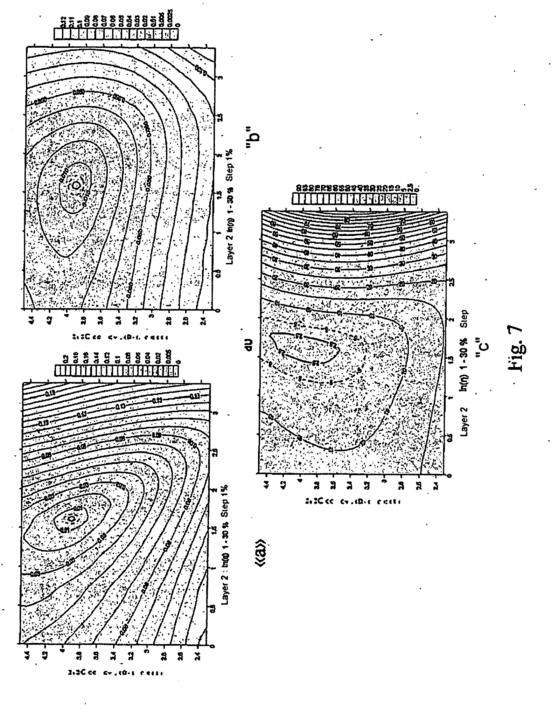

The understanding of the physical meaning of the problem is helpful for its solving. It has been shown that △U field and its normalized derivatives show a different ratio between IP and electrodynamics. (See P.Yu. Legeido "The Theory and Technologies of Differentially Normalized Geoelectric Prospecting for Investigating Polarizable Sections in Oil and Gas Geophysics." A Thesis for a Doctoral Degree in Geology and Mineralogy, Irkutsk, 1998). Difference is manifested almost throughout the entire time interval, and is most noticeable at relatively great decay times. The result is that the weight input of different section parameters in ΔU, in $P_1$ and in Dφ is noticeably different. This results in a different objective modular surface and, in most cases, in spacing of their local minimums (See Fig.7). Thus, when entering a local minimum it is possible to switch from one minimized function to another and continue iterating. Minimums of objectives ΔU, $P_1$ and Dφ will normally coincide only near the solution point (according to the statement of the problem). Fig. 7 shows two-dimensional cuts of the objectives in the space of parameters ρ and η for the 2nd layer.

The objective modular surface for Dfi near the solution point is isometric. There is no equivalence. (See Fig. 7 b).

The gully on the objective modular surface indicates equivalence of the electrical resistivity and coefficient. (See Fig. 7 c).

For the model shown in Table 4 and used to construct Fig.7, the parameters of the 2nd layer are changed, i.e. the resistance is changed from 10 to 90 Ohm.m, the polarizability from 1 to 30%.

Table 4

| Layer | $\rho$, Ohm-m | $\eta$, % | $\tau$, msec | $c$ | h, m |
|---|---|---|---|---|---|
| 1 | 50 | 2 | 100 | 0.5 | 500 |
| 2 | 50 | 5 | 100 | 0.5 | 500 |
| 3 | 50 | 2 | 100 | 0.5 | $\infty$ |

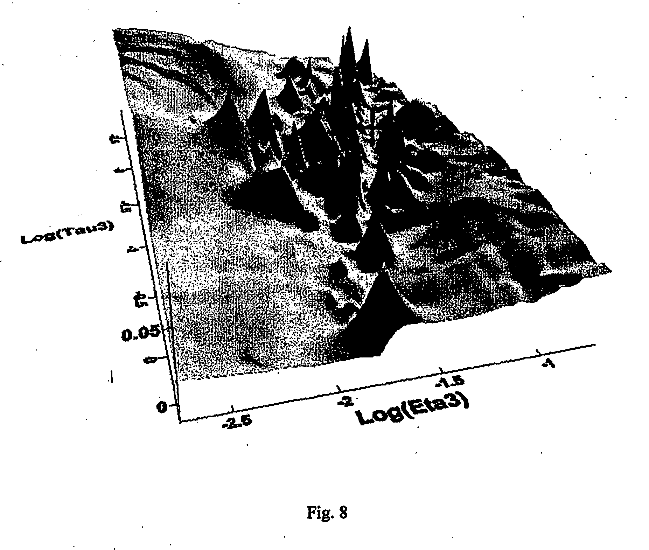

Calculations are done for an array of A 500 B 500 M 500 O 500 N for a time range of 3.5 msec to 1.5 sec.
At the same time the objective modular surface in the space of polarization parameters ($\eta$, $\tau$, $c$) is much more dissected, especially with shifted estimates of the electrical resistivity (See Fig. 8, Table 5). Hence, it is clear why it is necessary to obtain independent estimation of $\rho$ values.

Table 5.

| Layer | $\rho$, Ohm·m | $\eta$, % | $\tau$, msec | $c$ | h, m |
|---|---|---|---|---|---|
| 1 | 10.9 | 0.12 | 0.01 | 0.59 | 50 |
| 2 | 93 | 0.105 | 0.01 | 0.53 | 300 |
| 3 | 8.7 | 0.09 | 0.01 | 0.5 | 100 |
| 4 | 279 | 0.06 | 0.01 | 0.4 | 200 |
| 5 | 31 | 0 | 0.01 | 0.5 | 500 |
| 6 | 87 | 0 | 0.01 | 0.5 | 1000 |
| 7 | 1000 | 0 | 0.01 | 0.5 | 2150 |

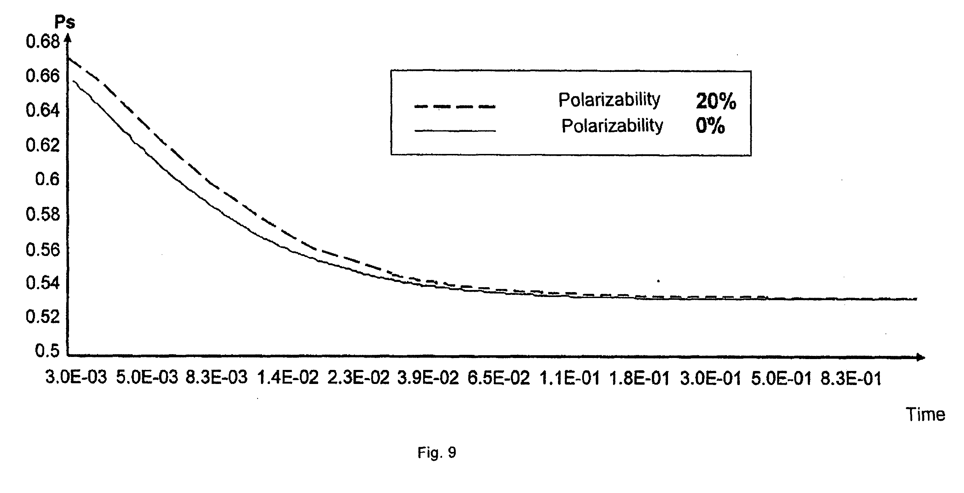

The cross in the diagram shows solution point. (See Fig. 8).
For that purpose, parameter conditionally named $P_s$ is applied. The fundamental concept lying behind its formation is a weak dependence on polarization parameters where sufficient sensitivity to electrical resistivity is maintained. Results of the modeling demonstrated that for the above it is enough to use parameter $P_1$ recorded when the current is switched on. Indeed, with sufficiently small decay times, the ratio between IP and electrodynamics is small, and this parameter is only slightly affected by the polarizing parameters of a medium. Yet with relatively great decay times, $\Delta U_{IP}$ values usually do not exceed single-digit percent as compared with $\Delta U_{APPL}$. This is illustrated in Fig. 9, which shows Ps variations less than 0.006, when polarization parameters vary over a virtually realizable range ($\eta$ from 0 to 20%). That enables $\rho$ values to be determined independently.
The section model and the array employed for the diagram in Fig. 9 are shown in Fig. 8 and in Table 5.
Thus, at the first stage of the inverse modeling, values of the electrical resistivity and their probable spread are defined layer-by-layer by minimizing the functional of $P_s$ variances for maximum and minimum polarizability variation limits. Normally, the dispersion of estimates $\rho$ in this case does not exceed 20%.
Further, when $\rho$ variances are allowed within the above limits, parameter values of the medium polarizability are selected through sequentially minimizing the functionals of $P_1$, $\Delta U$ and D$\varphi$ variances. However, normally an objective modular surface is so complicated that frequently it becomes problematical to derive a solution (search of the bare minimum of the objective). In this case, the method of observation with multiple spacings, where the following parameters that characterize the electromagnetic field are simultaneously recorded, is applied:

$\Delta U_{DECAY}$ to $\Delta U_{appl}$., $P_1$. D$\varphi$ and $P_s$. That allows the medium in the observed field to be restored virtually for all types of the geologic section that are typical for oil and gas bearing regions.

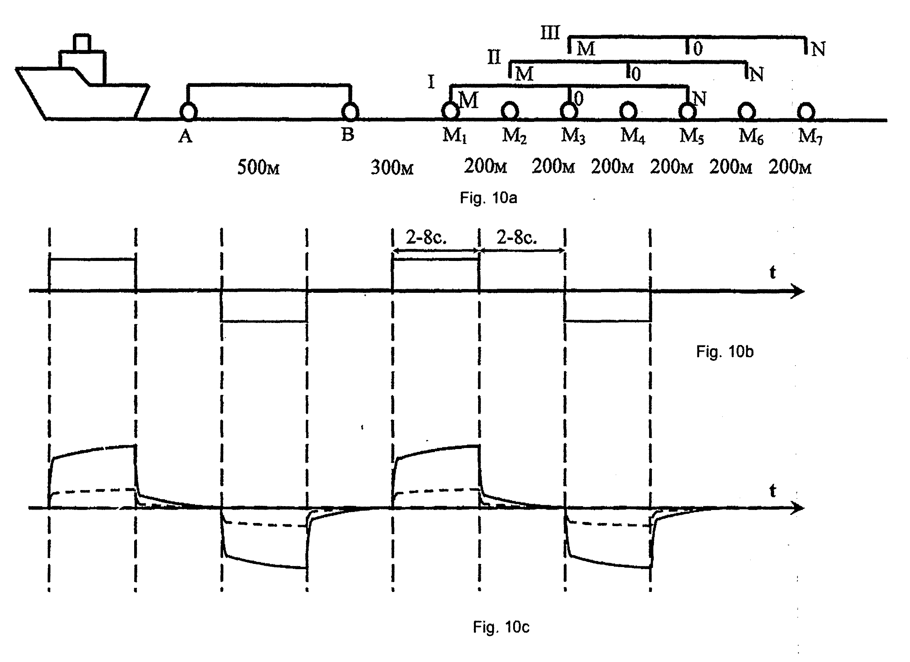

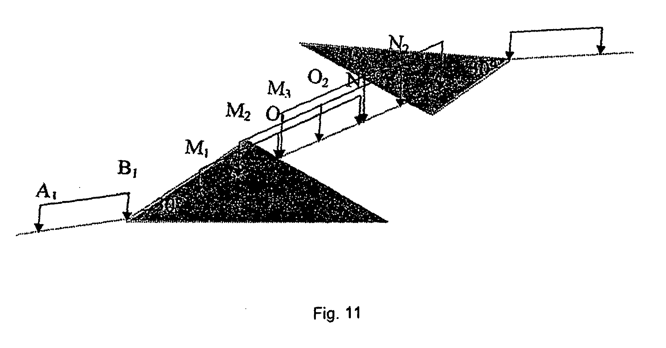

In this case, during offshore operations, for example, the following array shown in Fig. 10 is employed.
The method is implemented in the following manner.
An example. An array consisting of two grounded current lines positioned on either side from several receiving lines is placed on the ground surface along the profile line (See Fig. 11). In this case, the receiving lines do not cross the sector boundary, in which the signs of electrodynamical processes and IP processes coincide. For axially symmetric media, the boundary lines will run along the segment constructed from the grounding points at an angle of 45° to the continuation of the current lines. In practice, the condition of placing the receiving lines within the sector limited by an angle of 30° is observed. The position of the receiving and current electrodes is defined by using satellite GPS receivers.

The medium under study is excited by the current lines one at a time with square-wave bipolar current pulses with an on-off time of 2 followed by a space after each of them. In each period of that pattern, the first-order potential differences of the electrical field are recorded at the observation points between all adjacent receiving electrodes and the second-order potential differences between each pair of the adjacent receiving electrodes:

- When the current is switched on;
- When the current is applied;
- In the spaces between the current pulses.

Recording is made at a prescribed constant time interval of 0.25 msec by using a 24-bit AD converter of Crysrall concurrently for all receiving lines.

The obtained values of $\Delta U(t_i)$ and $\Delta^2 U(t_i)$ signal data sets are processed both by using known algorithms (including those with the aid of $\mu$ - the estimator found by using the Hampel function - to obtain readings for fixed time delays arranged at a logarithmic increment on the time axis; data smoothing in a two-dimensional running window; impulse interference elimination) and proprietary programs (reduction of cultural 50-Hz noise by using a differentiating filter). For further processing, the obtained instantaneous values of the first-and second-order potential differences are integrated into the time windows.

The values of the first-and second-order potential differences defined for each position of the current dipole relative to the receiver one are summarized, and thus the following interpretable parameters, which are the input of the inversion program, are derived:

$$\Delta U_H = \frac{\Delta U(t_i)_1}{\Delta U(t_0)_1} + \frac{\Delta U(t_i)_2}{\Delta U(t_0)_2}, \quad P_1 = \frac{\Delta^2 U(t_i)_1}{\Delta U(t_i)_1} + \frac{\Delta^2 U(t_i)_2}{\Delta U(t_i)_2}, \quad P_s = \frac{\Delta^2 U(t_i)^*_1}{\Delta U(t_i)^*_1} + \frac{\Delta^2 U(t_i)^*_2}{\Delta U(t_i)^*_2},$$

$$D\varphi = (\frac{\frac{\partial}{\partial t}\Delta^2 U(t_i)_1}{\frac{\partial}{\partial t}\Delta U(t_i)_1} + \frac{\frac{\partial}{\partial t}\Delta^2 U(t_i)_2}{\frac{\partial}{\partial t}\Delta U(t_i)_2}) - (\frac{\Delta^2 U(t_i)_1}{\Delta U(t_i)_1} + \frac{\Delta^2 U(t_i)_2}{\Delta U(t_i)_2}) \quad . \text{(7)}$$

Here,

- $\Delta U$ and $\Delta^2 U$ are first-and second-order potential differences of the electrical field, respectively;
- inferior indexes 1 and 2 correspond to measurements obtained from the first and second position of the current line;
- $(t_i)$ are time windows, in which the signal is recorded after the current is switched off in the current line;
- $(t_0)$ corresponds to the time intervals when a current impulse is applied, where the electrical field of transient phenomena virtually does not differ from its steady-state value that corresponds to the direct current;
- upper index * corresponds to measurements in time windows $(t_i)$, made when the current is applied;
- $\Delta U_H$ are normalized values of first-order potential differences, a complete analog of the known parameter of the IP method - apparent polarizability $\eta_K$; parameters $P_1$ $D\varphi$ and $P_S$ are defined above.

Numerical differentiation operation with respect to time is performed using a second-order approximation polynomial by determining its coefficient in the sliding time window. The approximation is performed by the least-squares method.

When summing the measurements from two transmitter coils, the correspondence rule for positioning the receiving lines symmetrically relative to the centre of the array is observed.

During marine operations, receiving and current lines are towed behind the ship during its movement. In this case, since the first layer is spatially homogeneous (sea water), measurements are taken with one position of the current line relative to the receiving electrodes.

The following parameters are defined:

$$\Delta U_{H} = \frac{\Delta U(t_i)}{\Delta U(t_0)}, \quad P_1 = \frac{\Delta^2 U(t_i)}{\Delta U(t_i)}, \quad P_s = \frac{\Delta^2 U(t_i)^*}{\Delta U(t_i)^*}, \quad D\varphi = \frac{\frac{\partial}{\partial t}\Delta^2 U(t_i)}{\frac{\partial}{\partial t}\Delta U(t_i)} - \frac{\Delta^2 U(t_i)}{\Delta U(t_i)} \qquad (8)$$

Recording and postprocessing of the signals during offshore operations are similar to those performed during the land data acquisition; marine data acquisition is distinguished by the following:

- Receiving electrodes are made of weakly polarizable metal wire, for example, lead. Their linear dimensions exceed the cross section of the floating line not less than one hundred times. This design of the electrodes reduces noise generated during the movement of the receiving electrodes more than by an order.
- The current electrode, closest to the ship, is kept from the stern at a distance of about 50 m. That allows the influence of the ship on the distortion of transient phenomena to be neglected, since the ship acts as a contrasting three-dimensional polarizable conductive body.
- Geometrical parameters of the array are recorded using navigational satellite facilities.
- Processing is performed using robust procedures for hydrographical information, which is reduced to a single time grid that corresponds to the measuring instants of transient phenomena.
- Spatial averaging of profile data in terms of U and $\Delta2U$ is performed within one virtual stake to obtain interpretation parameters. The length of a profile segment that correlates with one stake is chosen based on the number of recorded samples required to achieve the needed accuracy.

Further, using values of these four parameters and a differential equation of mathematical physics for the electric field intensity in a conductive medium with frequency dispersion of conductivity:

$$\Delta \vec{E}(t) - \mu_0 \mu \frac{\partial}{\partial t}(\sigma \vec{E}) = 0, \qquad (9)$$

where:

$\Delta$ is Laplace operator;
$\mu$ is magnetic conductivity, a constant magnitude for nonmagnetic media;
$\sigma$ is electrical conductivity, for polarizable media it is assumed to be frequency-dependent in accordance with equation (1).

The inverse problem of geoelectrics is solved and the following set of geoelectric parameters is defined layer-by-layer: electrical resistivity $\rho$ (or the inverse value, i.e. electrical conductivity $\sigma$), polarizability coefficient $\eta$, time constant $\tau$, width of relaxation spectrum c. In this case, first, using Ps, $\rho$ values and their dispersion are determined layer-by-layer. Further, $\eta$, $\tau$, c are calculated using all four interpretation parameters.

The method has been tested across a wide range of geological and geophysical conditions, including during exploration for accumulations beneath a poorly conducting halogen carbonate layer, under the conditions of widespread trappean magmatism, in the areas of old and young platforms, continental depressions, fore deeps and continental shelf. Results of the method do not depend on trap types (structural, structural tectonic, structural lithological and others) or reservoirs (terrigenous, carbonate).

The method may be used in exploration for accumulations located at depths of from 200m to 5km.

Total elimination of distortions from local objects found in some $\varepsilon$ - vicinity of the measuring array without attenuation and distortion of the response from of the deep part of the section can also be demonstrated.

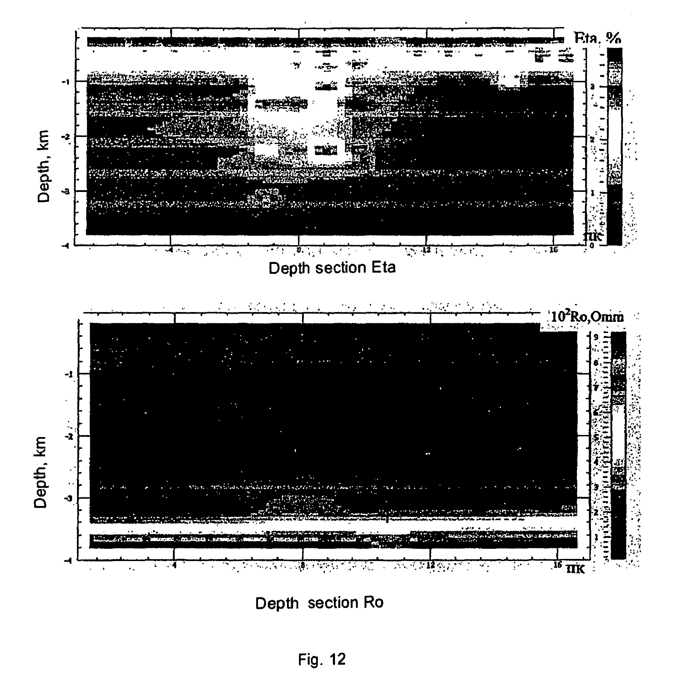

Results obtained using this method are illustrated by one of profiles in the Bratsk gas condensate field of the Siberian Platform (the Irkutsk Region) (See Fig. 12).

The horizontal axis represents profile staking-out, the vertical axis denotes depths. Color highlights the values of geoelectric parameters: polarizability coefficient n and electrical resistivity $\rho$ obtained through inverse modeling. The depth section $\rho$ shows a number of layers distinguished by specific resistivity; in the central part of the profile, a tectonic disturbance is distinctly manifested. In the lower part of the section, an area with high values of electrical resistivity coinciding in plan with the position of a gas accumulation can be identified. Above it, an IP anomaly is found up the section, which is associated with the response from the rocks secondarily altered under the influence of hydrocarbon migration.

Thus, this method coupled with seismic survey can dramatically increase confidence in forecast in oil-and-gas exploration geology. This method is useful in identifying and delineating hydrocarbon accumulations as it involves much fewer costly deep wells. The method is distinguished by mobility, high geological and economic effectiveness, lower costs. This method, in terms of the above parameters, substantially exceeds the conventional methods applied in direct exploration for hydrocarbon accumulations. This method for IP investigation seems to be rather prospective and its field of use extends beyond oil-and-gas geophysics. Estimates indicate that this method can be successfully applied in the search for ore bodies, delineation of kimberlite pipes and in solving any other geological problems.

The method coupled with seismic survey can be successfully applied for solving oil and gas exploration problems at a number of sites of the Siberian Platform (terrigenous and carbonate Riphean and Vendian-Lower Cambrian productive complexes), Eastern European Platform, terrigenous Cambrian reservoirs, where the size of traps is single-digit hundred meters, the Western Siberian Platform, on terrigenous Mesozoic deposits, the Scythian Platform, the Timano-Pechora oil and gas bearing province, fields in the Northern Caspian and Volga Region, the Dagan field, karst and porous and reef carbonate formations, the Selenga Depression, deltaic deposits, in the Amur and Piam basins, on continental terrigenous sediments, on the continental shelf of the Caspian, Kara and Azov seas in exploration for accumulations located at depths of from 200m to 5km.

## Claims

1. The method of geoelectric prospecting using spatial derivation of the transient buildup across several spacings, wherein the electromagnetic field is excited in the medium by applying to it a low frequency periodic sequence of sign-variable square-wave current pulses when the sounding array passes along the survey profile determining at the same time the coordinates of all grounding points; with a prescribed time increment in the spaces between current pulses, throughout the space and after applying the current pulses throughout the pulse duration, instantaneous values of first and second-order potential differences transient phenomena of the electrical field between each pair of the adjacent receiving electrodes on several receiving lines are measured; the obtained values of $\Delta U$ $(t_i)$ and $\Delta^2 U(t_i)$ signal data sets are processed using known algorithms, for example, via compressing the source array of input data into the time windows arranged with a logarithmic increment on the time axis, with all first-order and second-order potential differences numerically differentiated with respect to time; a set of interpreted parameters is derived by calculation; based on the calculated parameters, the inverse problem is solved using a differential equation of mathematical physics for the strength of a dipole source in a polarizable conductive medium according to equation

$$\Delta \vec{E}(t) - \mu_0 \mu \frac{\partial}{\partial t}(\sigma \vec{E}) = 0,$$

where:

$\Delta$ is Laplace operator;
$\mu$ is magnetic conductivity, a constant magnitude for nonmagnetic media;
$\sigma$ is electrical conductivity for polarizable media, which is assumed to be frequency-dependent in accordance with the Cole-Cole equation:

$$\sigma_{(\omega)} = \sigma_{(\infty)}(1 - \frac{\eta}{1 + (i\omega\tau)^c}) \qquad ,$$

where:

$\sigma_\infty$ is electrical conductivity at an infinite frequency;
$\eta$ is polarizability coefficient;
$\omega$ is circular frequency;

$\tau$ is time constant;

$c$ is relaxation spectrum width varying from 0 to 1,

with the inverse modeling yielding the medium model the closest, in terms of geometrical structure and electrical parameters, to the one under study; where, taking into consideration all a priori data, modeling is used only for the class of geologically interpreted models; boundary values of the polarizability coefficient for each site are defined, geoelectric sections of the obtained parameters $\sigma$ (or $\rho$), $\eta$, $\tau$, $c$ are constructed and areas with anomalous values corresponding in plan to the location of oil and gas accumulations therein are identified, wherein measurements are made by several receiving lines; two current lines of the sounding array are positioned almost symmetrical relative to the receiving lines; the receiving lines are located within a sector of 30° from the continuation of the current lines; transient signals are recorded either by ground dipole axial sounding arrays with a flexible geometry or marine sounding arrays with continuous signal recording while the ship is moving; from recorded potential difference curves ($\Delta U(i)$ and $\Delta^2 U(i)$), a set of interpreted parameters $P_1$. $D_\varphi$, $\Delta U_H$, $P_s$ after processing and compressing into the time windows and differentiating with respect to time is calculated using the equations below:

for ground investigations:

$$\Delta U_H = \frac{\Delta U(t_i)_1}{\Delta U(t_0)_1} + \frac{\Delta U(t_i)_2}{\Delta U(t_0)_2}, \quad P_1 = \frac{\Delta^2 U(t_i)_1}{\Delta U(t_i)_1} + \frac{\Delta^2 U(t_i)_2}{\Delta U(t_i)_2}, \quad P_s = \frac{\Delta^2 U(t_i)^*_1}{\Delta U(t_i)^*_1} + \frac{\Delta^2 U(t_i)^*_2}{\Delta U(t_i)^*_2},$$

$$D\varphi = \left( \frac{\frac{\partial}{\partial t} \Delta^2 U(t_i)_1}{\frac{\partial}{\partial t} \Delta U(t_i)_1} + \frac{\frac{\partial}{\partial t} \Delta^2 U(t_i)_2}{\frac{\partial}{\partial t} \Delta U(t_i)_2} \right) - \left( \frac{\Delta^2 U(t_i)_1}{\Delta U(t_i)_1} + \frac{\Delta^2 U(t_i)_2}{\Delta U(t_i)_2} \right),$$

for offshore investigations:

$$\Delta U_H = \frac{\Delta U(t_i)}{\Delta U(t_0)}, \quad P_1 = \frac{\Delta^2 U(t_i)}{\Delta U(t_i)}, \quad P_s = \frac{\Delta^2 U(t_i)^*}{\Delta U(t_i)^*}, \quad D\varphi = \frac{\frac{\partial}{\partial t} \Delta^2 U(t_i)}{\frac{\partial}{\partial t} \Delta U(t_i)} - \frac{\Delta^2 U(t_i)}{\Delta U(t_i)},$$

where:

- $\Delta U$ and $\Delta^2 U$ are respectively first-and second-order potential differences of the electrical field;
- inferior indexes 1 and 2 correspond to the measurements obtained from the first and second position of the current line;
- ($t_i$) are time windows, in which the signal is recorded after the current in the current line is switched off;
- ($t_0$) corresponds to the time intervals when a current impulse is applied and the electrical field of transient phenomena virtually does not differ from its steady-state value that corresponds to the direct current;
- upper index * corresponds to the measurements in time windows ($t_i$) made when the current is applied;
- $\Delta U_H$ is parameter of the IP method - apparent polarizability $\eta_k$;

parameters $P_1$ $D\varphi$, $\Delta U_H$, $P_s$ are used to solve the inverse problem, where primarily parameter $P_s$ is used to derive, layer-by-layer, the values of electrical resistivity $\rho$; sequential minimization $P_1$. $\Delta U_H$, $D\varphi$ and $P_s$ is performed by using the difference in their objective modular surfaces; and the layer-by-layer values of $\eta$, $\tau$, $c$ are defined; depth distribution is constructed along the value profile of geoelectric parameters $\rho$, $\eta$, $\tau$, $c$, on the base on which a conclusion is made about the presence of induced polarization anomalies associated with hydrocarbon accumulations; and oil and gas accumulations are delineated and the quality of their saturation is assessed.

2. The method of geoelectric prospecting of claim 1, wherein the obtained values of signal data sets recorded by using an AD converter are processed with the aid of $\mu$ - the estimator found via the Hampel function - to obtain readings at fixed time delays - and data smoothing in a two-dimensional running window separating a signal from noise.

3. The method of geoelectric prospecting of claim 1 or claim 2, wherein the said values of signal data sets recorded by using a said AD converter at every time delay are processed by an iteration algorithm, which eliminates the trend by using a high-pass filter, to minimize the impact of the potential gradients of the receiving electrodes, the influence of telluric currents and outliers.

4. The method of geoelectric prospecting of claim 1, wherein the said obtained values of $\Delta U_{(i)}$ and $\Delta^2 U(t_i)$ signal data sets are be preprocessed by suppressing commercial repeatable interference by using a differentiating filter.

$\Delta u_1$    $\Delta u_2$

A₁    B₁    M    O    N    A₂    B₂

Fig. 1a

1

2 c.    2 c.

2

3

$t$

Fig. 1b

1

4

5

6

7

$t$

Fig. 1 c

Fig.2

Fig. 3a

Fig. 3b

Fig. 3c

Fig. 3d

Fig. 4a

Fig. 4b

ΔU, в/a

Fig. 5a

Dφ

Fig. 5b

EP 1 876 473 A1

Fig. 6a

Fig. 6b

Fig. 6c

Fig. 7

Fig. 8

Fig. 9

EP 1 876 473 A1

III ⌐M⌐ ⌐0⌐ ⌐N
II ⌐M⌐ ⌐0⌐ ⌐N
I ⌐M⌐ ⌐0⌐ ⌐N

A          B          M₁   M₂   M₃   M₄   M₅   M₆   M₇

500м      300м    200м  200м  200м  200м  200м  200м

Fig. 10a

2-8c.   2-8c.

t

Fig. 10b

t

Fig. 10c

Fig. 11

Depth section Eta

Depth section Ro

Fig. 12

## INTERNATIONAL SEARCH REPORT

| International application No. |
| --- |
| PCT/RU 2006/000081 |

**A.    CLASSIFICATION OF SUBJECT MATTER**

*G01V 3/06  (2006.01)*

According to International Patent Classification (IPC) or to both national classification and IPC

**B.    FIELDS SEARCHED**

Minimum documentation searched (classification system followed by classification symbols)

G01V 3/00, G01V 3/02, G01V 3/04, G01V 3/06

Documentation searched other than minimum documentation to the extent that such documents are included in the fields searched

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | RU 2219568 C1 (RYKHLINSKY N.I. et al.), 20.12.2003 | 1-4 |
| A | RU 2236028 C1 (RYKHLINSKY NIKOLAI IVANOVICH), 10.09.2004 | 1-4 |
| A | SU 1122998 A (VSESOJUZNOE MORSKOE NAUCHNO-PROIZVODSTVENNOE OBIEDINENIE INZHENERNOI GEOLOGII "SOJUZMORINZHGEOLOGIYA"),  07.11.2001 | 1-4 |
| A | CA 2299743 A1 (DUCKWORTH KENNETH) 22.08.2001, the claims | 1-4 |
| A | US 4617518 A (EXXON PRODUCTION RESEARCH CO.) 14.10.1986 | 1-4 |

☐ Further documents are listed in the continuation of Box C.     ☐ See patent family annex.

| | |
| --- | --- |
| \*     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| 02  May 2006 (02.05.2006) | 01 June  2006 (01.06.2006) |

| Name and mailing address of the ISA/ | Authorized officer |
| --- | --- |
| Facsimile No. | Telephone No. |

Form PCT/ISA/210 (second sheet) (July 1998)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- SU 2219568

### Non-patent literature cited in the description

- *Geoelectric Prospecting. Reference Book on Geophysics,* 1989, vol. 1-2
- **V. A. KOMAROV ; L., NEDRA.** *Geoelectric prospecting Using the Induced Polarization Method,* 1980, 390
- **A. V. KULIKOV ; YE. A. SHEMYAKIN.** *Geoelectric prospecting Using the Phase Method of Induced Polarization,* 1978, 160
- **K.S. COLE ; R.H. COLE.** Dispersion and Absorption in Dielectrics. *J. Chem. Phys.,* 1941, vol. 6
- Application of the Induced Polarization Method for Oil and Gas Exploration. **Z.A. KRUGLOVA.** Interchange of Experience in the Area of Geophysical and Geochemical Prospecting for Oil and Gas Accumulations. VIEMS, 1975, 110-111
- Effectiveness of Hydrocarbon Accumulation Forecasting Using the Induced Polarization Method in Western Siberia. *International Geophysical Conference,* 1995
- Application of Geophysical Methods for Direct Exploration for Oil and Gas. **I.G. BAZOVKINA ; YU.S. KOROLKOV ; A.A. KUNAREV et al.** Itogi nauki i tekhniki. VINITI Publishing House, 1978
- Effectiveness of Direct Exploration for Oil and Gas Accumulations Using Geophysical Techniques. VIEMS, 1983
- Geological Effectiveness of Geophysical Works in Volga-Urals Oil-and-Gas Province. Nedra, 1979
- **J. WAIT.** Geoelectromagnetism. Nedra, 1987, 235
- Methods for Solution of III-Defined Problems. 1974, 223
- **B.S. SVETOV ; V.V. AGEYEV ; N.A. LEBEDEVA.** Polarizability of Rocks and the Phenomenon of High-Resolution Geoelectric Prospecting. *Geofizika,* 1996, (4
- **V.A. KOMAROV.** Geoelectric prospecting Using Induced Polarization Method. Nedra, 1980, 390
- The Theory and Technologies of Differentially Normalized Geoelectric Prospecting for Investigating Polarizable Sections in Oil and Gas Geophysics. **P.YU. LEGEIDO.** A Thesis for a Doctoral Degree in Geology and Mineralogy. 1998